# EUROPEAN PATENT SPECIFICATION

(11) **EP 3 085 457 B1**
(45) Date of publication and mention of the grant of the patent: **07.08.2019**
(21) Application number: 16165468.6
(22) Date of filing: 15.04.2016
(51) Int. Cl.: B05B 7/04, B05B 7/16, B05B 12/14, B05B 13/06, B05B 15/68, B29B 7/74, B29B 7/76

(54) **MACHINE FOR COATING CONCRETE ARTICLES**
MASCHINE FÜR DIE BESCHICHTUNG VON GEGENSTÄNDEN AUS BETON
MACHINE DE REVÊTEMENT D'OBJETS EN BÉTON

(30) Priority: 20.04.2015 IT TV20150054
(43) Date of publication of application: 26.10.2016
(73) Proprietor: Canzian Fratelli S.r.l., 31030 Susegana (TV) (IT)
(72) Inventor: CANZIAN, Antonio, 31030 SUSEGANA (TV) (IT); ZANARDO, Paolo, 31030 SUSEGANA (TV) (IT)
(74) Representative: Citron, Massimiliano

(56) References cited:
- DE-A1- 19 741 126
- US-A1- 2003 052 189
- US-A1- 2015 024 138
- Sika Deutschland GmbH: "Product Data Sheet PRODUCT DATA SHEET Sika Permacor -3326 EG H Very high solid epoxy coating for steel and concrete", , 22 January 2014 (2014-01-22), XP055238747, Retrieved from the Internet: URL:http://deu.sika.com/dms/getdocument.ge t/56a249db-1df2-3ef3-a6bf-aa3a738d6b2b/E_9 039_Sika_Per_3326 EG-H.pdf [retrieved on 2016-01-05]

## Description

The invention relates to a machine and method for coating concrete articles, especially tubes or manholes.

The underground sewerage infrastructure, such as pipes and manholes, must always be lasting longer despite the aggressiveness of the environment, wherein the action of bacteria promotes reactions like

H₂S + 2O₂ → H₂SO₄

from which corrosion ensues.

A traditional method of protecting these sewage works from water penetration or chemical attacks envisages concrete coatings, e.g. crystalline waterproofing to close pores thereof, or the application of PEHD jackets. The disadvantages, however, are many. Not only the production of the coatings requires very expensive and *ad hoc* equipment, but economically the matter is feasible only if a sale order is certain, otherwise the investment is not justified.

Another protective system is the high-pressure spraying of resins (200-300 atmospheres) on the article's walls. However, the resin, which is of common type, does not grip to the concrete and does not resist to chemicals. One of the reasons is that the resin both is sprayed in too a violent way and draws air with it, so that when the resin reaches a pore located in the concrete, it cannot stay there permanently but bounces off. Thus the surface of the article remains full of irregularities and uncovered micro-zones.

US 2003 052189 discloses a spraying apparatus for a two-component coating. The two components are sucked from sources to feeds a nozzle under pressure.

DE 197 41 126 discloses spraying booth movable by ropes and a motor that can move on a wall to be covered. A compound is sprayed with a pressure of about 70-100 bar by guns set in the booth.

To obviate to at least one of these problems is the main object of the invention.

In particular, it is an object to provide a machine for coating concrete products, especially tubes or manholes, with a two-component epoxy resin. The machine comprises the features of claim 1.

The major advantages of the machine are e.g. that:
- unlike known machines using high-pressure pumps to expel and atomize the resin, it uses jets of air to atomize the resin and plungers to expel it, so the machine can apply a low pressure to the resin during the dosing and the mixing;
- known machines using pumps to expel the resin, thanks to said plungers and dosing tanks, it allows the precise and right-proportioned mixing of the resin at low pressure (e.g. 10 atmospheres), thereby improving the adhesion and uniformity of the resin on the concrete. The two components are transferred from the storage tanks to the dosing tanks in quantities that depend on the volume of the dosing tanks. This is a reliable and easy way to dose precisely and without sophisticated volumetric controls;
- it doses the components of the resin while the resin is applied, therefore the constancy in the result of the application is ensured;
- it doses and mixes continuously the resin, so the resin is applied while it starts to catalyze;
- unlike known machines using pumps to expel the resin, it allows the mixing and spraying of resin containing also particles (see below), which would otherwise destroy ordinary pumps in a short time;
- the resin can be applied on the finished product, without changing the production process of the concrete article.

Another advantage of the machine is to be able to spray an above-mentioned resin with microspheres, which is impossible for the known machines whose mechanical components would be damaged in a very short time.

Preferably the resin comprises indeed microspheres, e.g. of about 100-200 microns diameter and/or relative to 10-20% by weight of the resin, for example. made of glass or silicon (glass beads). The effect is, during spraying of the resin, of bombarding the air bubbles formed on the porosity of the concrete, obtaining a well-uniform layer of resin.

Another aspect of the invention is the use of such a resin, in particular the use of a resin, preferably a two component epoxy resin, that comprises microspheres, e.g. of about 100-200 microns diameter and/or made of glass or silicon, either in a machine or method as hereinbefore defined in any of the variants indicated, or during a spraying phase to coat concrete articles hollow inside, in particular tubes or manholes.

Some advantageous variants for the machine, to be implemented alone or in combination with each other:
the two dosing tanks have internal volumes whose ratio is equal or proportional to the curing ratio of the resin, so as to ensure the accuracy and consistency of the dosage. E.g. the ratio of the base areas in the dosing tanks is equal to the mixing ratio of the components of the resin; and/or
the air jets, e.g. three and/or arranged at 120 degrees relative to each other, are converging towards a resin outlet hole of the spraying head, thus ensuring an adequate spraying of the dense resin; and/or
the machine comprises a movable carriage, e.g. set on rails, on which is mounted a turret with a (preferably vertically) extensible or (preferably vertically) sliding arm or portion, at the end of which there is placed the spraying head; or at said end there is mounted a L- or C-shaped arm, and on the arm there is placed the spraying head; and/or
the spraying head is rotatably mounted on the arm or on the extendable or sliding portion, and/or
the spraying head is arranged on a robotic arm; and/or the spraying head is comprised on a rotatable arm, to orient the spray jet; and/or
the machine comprises a heater means for heating the resin, e.g. placed at the outlet of the dosing tanks. The aim is to make the resin fluid in every situation, e.g. during winter.

Another problem to solve is the cleaning of said head at the end of spraying, because if the resin solidifies inside it would require long and laborious recovery operations. Furthermore another problem is how to clean, and well, both the static mixer and the nozzle, and starting from the inlet in the head of the ducts coming from the dosing tanks. As a solution the head comprises ducts that are able to be supplied by an accumulation of external solvent and adapted to direct the solvent from the inlet in the head of the ducts coming from the dosing tanks up to an outlet towards the outside of the nozzle.

Preferably the head comprises inner conduits for transporting fluid to control actuators, such as valves or pistons (or e.g. a command trigger for the resin jet) mounted on it.

Advantageously the head may also comprise a diverter valve for diverting towards said inner conduits the flow of ducts coming from said accumulation of solvent.

It is possible to use the same ducts for both the fluid and for the solvent, simplifying the construction of the head and allowing the solvent to run throughout it.

Advantageously, the diverter valve may be actuated by an actuator, like e.g. a pneumatic cylinder, to make the operation of spraying and cleaning automatic. The diverter valve may also be controlled manually.

The advantages of the invention will be more apparent from the following description of an embodiment of machine and method, making reference to the attached drawing in which
Fig. 1 shows a simplified three-dimensional view of a machine;
Fig. 2 shows an axonometric view of an application context for the machine of Fig. 1;
Fig. 3 shows a cross section of a nozzle.

In the figures identical numbers indicate identical or conceptually similar parts, and the machine and the method are described as in use.

A spraying machine MC comprises or is connectable to two tanks or sources 10, 12, also detachable from the rest, of component A and component B which by reacting together form the resin to be sprayed.

Via ducts 14, 16 the tanks 10, 12 feed respectively a block 18, 20 from which the components A and B are brought into storage cylinders 26, 28 via conduits 22, 24. From the cylinders 26, 28 the related component can flow into delivery pipes 32, 42 toward the block 18, 20 to then come out from them and - through conduits 30, 34 - arrive to a command block 40. The conduits 22, 24 may also serve for the delivery of the components, without having to use the delivery pipes 32, 42.

In the cylinders 26, 28 relative plungers 50, 52 are slidable and displaceable by means of arms 54, 56 connected integrally with each other by a crosspiece 58, which can be pushed by a piston 60 belonging to a pneumatic actuator 62, e.g. a third pneumatic or hydraulic or electric cylinder.

The block 40 feeds a static mixer 80, in which the components A and B can meet, react to form the resin and end up into a nozzle 82 from which the resin and compressed air, arriving from a source 86 through a tube 84 to atomize the resin, are expelled. The assembly of block 40 + static mixer 80 + nozzle 82 forms a spraying head H.

In the block 40 there may flow:
through a pipe 70, solvent contained in a tank or reservoir 72; and
through a tube 76, pressurized fluid contained in a tank or reservoir 78. This fluid serves to drive actuators or valves internal to the block 40.

In the block 40 there is a valve W that determines which of the incoming flows coming from the tubes 70, 84 is allowed the gain access inside the block 40.

On the ducts 30, 34 there are preferably mounted heater elements R, e.g. electrical coil, in order to heat the resin components.

### OPERATION

When it is desired to proceed with the application of the resin, the two tanks 26, 28 are filled with component A and B. For spraying, the actuator 62 is operated, so that the plungers 50, 52 will push the components to the mixer 80. Since the sections of the two tanks 26, 28 (and the area of the plungers 50, 52) have a ratio equal to the mixing ratio of the components A, B, in a simple way the constancy of dosage is obtained.

When the mixed front of resin reaches the nozzle 82, the compressed air jet arriving from the pipe 84 is started to spray the resin towards a concrete article.

After the application, it is needed to clean the mixer 80 and the nozzle 82, to avoid fouling or clogging. Then, the solvent in the tank 72 is sent into the block 40 and the mixer 80 via the conduit 70, to then get out from the nozzle 82.

in the illustrated ducts there are appropriate valves (not shown) whose open/close status determines the passage or not of fluid. Advantageously by acting on the valve W the ducts internal to the block 40, first used to convey the fluid extracted from the tank 86, are used (backwards) to spread the solvent into the block 40 up to the nozzle 82.

### METHOD

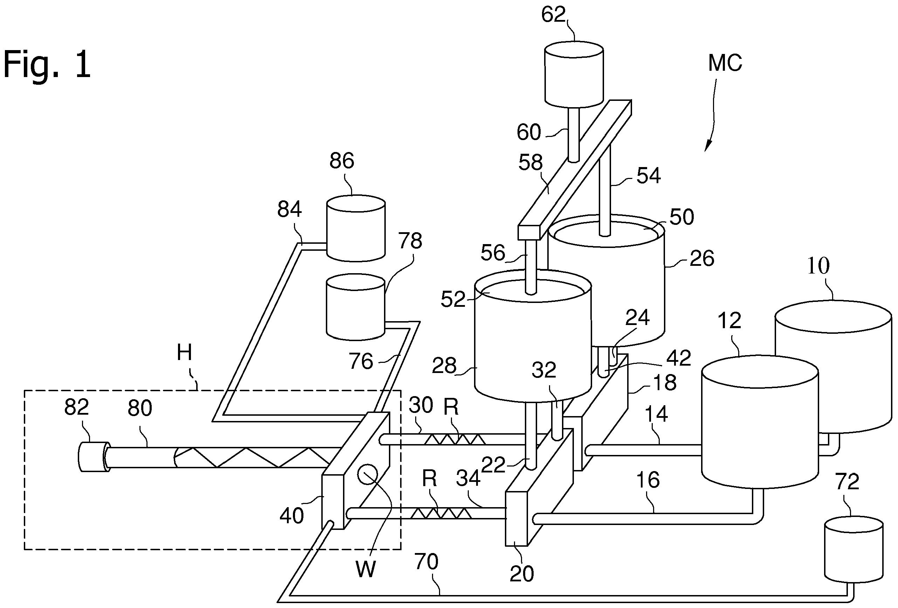

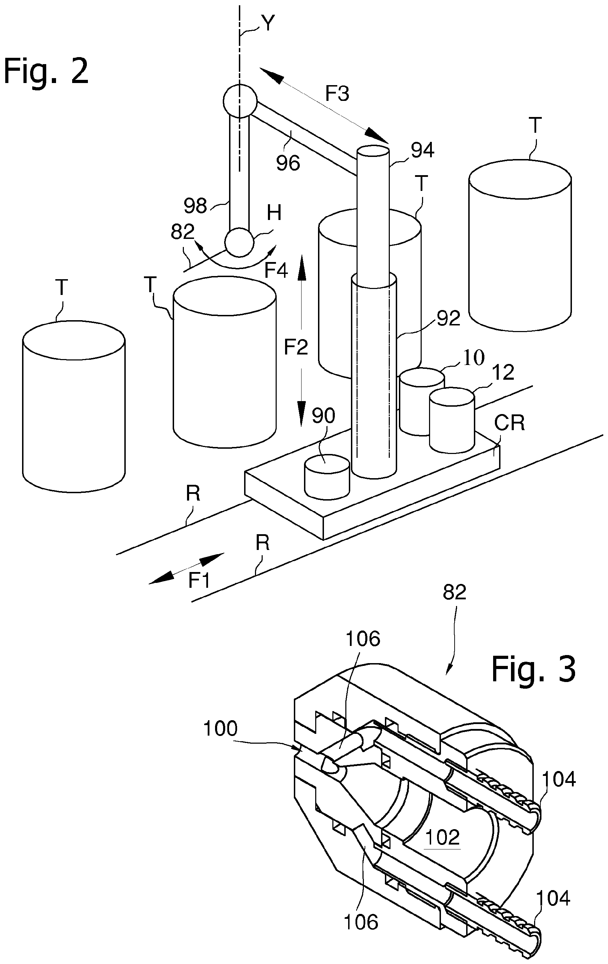

Fig. 2 shows conceptually a method of use, e.g. in the factory, of the machine MC and a method for coating tubes T. Fig. 2 also shows a different embodiment of a spraying machine, that includes the components of FIG. 1.

The tubes T are arranged on the ground in a row and with the axis put vertical. In parallel to the row of tubes T there are rails R, on which can move (arrow F1) a carriage CR, e.g. on wheels or caterpillars (not shown). The carriage CR has on board the tanks 10, 12 and a compressor 90 adapted to actuate or feed the actuator 62, for simplicity not shown in FIG. 2.

From the carriage CR rises a vertical turret formed by a fixed base 92 and a movable arm 94, liftable vertically with respect to the former (arrow F2), e.g. via a rack system. E.g. the fixed base 92 and the movable arm 94, or only or also the arm 98, may have telescopic structure.

From the free end of the arm 94 extends horizontally an, e.g. extensible (arrow F3), arm 96 from which extends a support 98 for the head H with the nozzle 82, mounted rotatably (arrow F4) on the support 98 bout a vertical axis Y.

The carriage CR is first brought in front of a tube T. By adjusting the height and the distance of the nozzle 82 from the base 92 (by setting the extension of the arm 94 from the base 92 and/or the position of the support 98 along the arm 96) it is brought to the top mouth of the tube T. The actuator 90 is activated and the mixed resin reaches the nozzle 82 and is sprayed from it. The nozzle 82 is lowered progressively inside the tube T by lowering the arm 94 with respect to base 92 and constantly rotated by 360 degrees to distribute the resin inside the cavity of the tube T.

Over and over, the operation is repeated for all the tubes T in the row, starting again from the first to give several passes of resin in the same tube T.

The nozzle 82 is shown in cross-section in Fig. 3. Note the exit hole 100 for the resin, the central cavity 102 in which the resin mixed by the mixer 80 arrives and passes, and the internal ducts 104 for the compressed air, with axis parallel to that of the cavity 102. The ducts 104 feed three portions 106 (only two visible) placed at 120 degrees from each other which converge towards the hole 100. A different number of ducts 104, 106 is possible, and with different geometric conformation.

### VARIANTS

Among the many possible ones we cite e.g. that the assembly of arms 92, 94, 96, 98 may be replaced by a single robotic arm, e.g. articulated, capable of supporting the nozzle 82 and associated feeding ducts; and/or the carriage CR may be sliding on rails attached to the ceiling of a shed, or in general the machine MC or the one in Fig. 2 may be moved by supporting it from above, avoiding the bulk of the track rails R on the ground.

## Claims

1. A machine (MC) for coating concrete articles (T), in particular tubes or manholes, with a two-component epoxy resin, comprising
a storage tank (10, 12) for each component of the resin,
a plunger (50, 52) for (i) sucking a quantity of a component from each tank inside a relative dosing tank (26, 28) and (ii) pumping the sucked quantity into a static mixer (80) connected downstream the dosing tanks,
a spraying head (H) located downstream the static mixer and equipped with jets of compressed air (84) adapted - in use - to atomize the resin out of the spraying head,
**characterized by** comprising a third pneumatic or hydraulic or motorized cylinder to move the plunger of each dosing tank in synchronized manner.

2. Machine according to claim 1, wherein the two dosing tanks have internal volumes whose ratio is equal or proportional to the curing ratio of the resin.

3. Machine according to claim 2, wherein the ratio of the base areas in the dosing tanks is equal to the mixing ratio of the components of the resin.

4. Machine according to claim 1 or 2 or 3, wherein the air jets converge towards a resin outlet hole (100) for the resin's exit from the spraying head.

5. Machine according to any one of the preceding claims, comprising a movable carriage (CR) on which is mounted a turret with a vertically extensible or vertically sliding arm (94), at the end of which there is placed the spraying head; or at said end there is mounted a L- or C-shaped arm (96), and on the arm there is placed the spraying head.

6. Machine according to claim 5, wherein the spraying head is rotatably mounted on the arm or on the extensible or sliding arm.

7. Machine according to any one of the preceding claims, comprising a heater means (R), for heating the resin, placed at the outlet of the dosing tanks.

8. Machine according to any one of the preceding claims, wherein the spraying head comprises ducts that are able to be supplied by an accumulation of external solvent (72) and adapted to direct the solvent from the entrance in the head of the ducts (30, 34) coming from the dosing tanks to an outlet (100) towards the outside of a resin nozzle arranged on said head.

9. Machine according to claim 8, comprising
inner conduits for transporting fluid to control actuators, such as valves or pistons, and
a diverter valve (W) for diverting towards said inner conduits the flow of ducts coming from said accumulation of solvent.

10. Machine according to claim 9, wherein the diverter valve is actuated by an actuator, like e.g. a pneumatic cylinder.

11. Machine according to any one of the preceding claims, wherein the resin comprises microspheres.

12. Machine according to claim 11, wherein the microspheres are of about 100-200 microns diameter and/or relative to 10-20% by weight of the resin.

13. Machine according to claim 11 or 12, wherein the microspheres are made of glass or silicon.

## Patentansprüche

1. Maschine (MC) zum Beschichten von Betonerzeugnisse (T), insbesondere Rohren oder Abflussschächten, mit einem Zweikomponenten-Epoxidharz, umfassend
einen Vorratstank (10, 12) für jede Harzkomponente,
einen Kolben (50, 52) zum (i) Ansaugen einer Komponentenmenge aus jedem Tank in einen entsprechenden Dosiertank (26, 28) und (ii) Pumpen die angesaugten Mengen in einen den Dosiertanks nachgeschalteten statischen Mischer (80),
einen dem statischen Mischer nachgeschalteten Sprühkopf (H), der mit Druckluftstrahlen (84) zum Zerstäuben - im Betrieb - des aus dem Sprühkopf austretenden Harzes versehen ist,
**gekennzeichnet durch** eine dritte pneumatische oder hydraulische oder motorisierte Trommel zum synchronisierten Bewegen des Kolbens jedes Dosiertanks.

2. Maschine nach Anspruch 1, wobei die beiden Dosiertanks Innenvolumina aufweisen, deren Verhältnis gleich oder proportional zum Katalyseverhältnis des Harzes ist.

3. Maschine nach Anspruch 2, wobei das Verhältnis der Grundflächen innerhalb der Dosiertanks gleich dem Mischungsverhältnis der Harzkomponenten ist.

4. Maschine nach Anspruch 1 oder 2 oder 3, wobei die Luftstrahlen zu einer Austrittsöffnung (100) des Harzes aus dem Sprühkopf zusammenlaufen.

5. Maschine nach einem der vorhergehenden Ansprüche, mit einem Laufwagen (CR), auf dem ein Revolver mit einem vertikal ausziehbaren oder verschiebbaren Arm (94) angebracht ist, an dessen Ende der Sprühkopf angeordnet ist; oder ein L-förmiger oder C-förmiger Arm (96) ist bei solchem Ende angebracht, und der Sprühkopf ist am Arm angeordnet.

6. Maschine nach Anspruch 5, wobei der Sprühkopf drehbar am Arm oder am ausziehbaren oder verschiebbaren Arm angeordnet ist.

7. Maschine nach einem der vorhergehenden Ansprüche, umfassend ein am Austritt der Dosiertanks angeordnetes Heizelement (R) des Harzes.

8. Maschine nach einem der vorhergehenden Ansprüche, wobei der Sprühkopf Kanäle aufweist, die durch Speicherung von externem Lösungsmittel (72) versorgt werden können und dazu ausgelegt sind, das Lösungsmittel aus dem Eintritt in den Kopf der von den Dosiertanks ankommenden Kanäle (30, 34) bis zum Austritt (100) zur Außenseite einer in solchem Kopf vorhandenen Harzdüse zu leiten.

9. Maschine nach Anspruch 8, umfassend
Innenkanäle zum Leiten von Flüssigkeit zu Steuerungsstellantrieben, wie Ventilen oder Kolben, und
ein Umlenkventil (W) zum Umleiten des Stroms von aus der Speicherung von Lösungsmittel ankommenden Kanälen zu solchen Innenkanälen.

10. Maschine nach Anspruch 9, wobei das Umlenkventil von einem Stellantrieb betätigt wird, wie z.B. pneumatischer Trommel.

11. Maschine nach einem der vorhergehenden Ansprüche, wobei das Harz Mikrokugeln umfasst.

12. Maschine nach Anspruch 11, wobei die Mikrokugeln einen Durchmesser von etwa 100 bis 200 µm und/oder ein Gewicht von 10 bis 20% des Harzes aufweisen.

13. Maschine nach Anspruch 11 oder 12, wobei die Mikrokugeln aus Glas oder Silizium bestehen.

## Revendications

1. Machine (MC) de revêtement de produits manufacturés en béton (T), en particulier de tuyaux ou de puits, avec une résine époxydique à deux composants, comprenant
un réservoir de stockage (10, 12) pour chaque composant de la résine,
un piston (50, 52) pour (i) aspirer une quantité de composant de chaque réservoir dans un réservoir de dosage (26, 28) correspondant et (ii) pomper les quantités aspirées dans un mélangeur statique (80) connecté en aval des réservoirs de dosage,
une tête de pulvérisation (H) en aval du mélangeur statique équipée de jets d'air comprimé (84) apte - en cours d'utilisation - à atomiser la résine quittant la tête de pulvérisation,
**caractérisé par le fait qu'**elle comprend un troisième cylindre pneumatique ou hydraulique ou motorisé pour déplacer le piston de chaque réservoir de dosage de manière synchronisée.

2. Machine selon la revendication 1, où les deux réservoirs de dosage ont des volumes intérieurs dont le rapport est égal ou proportionnel au rapport de catalysation de la résine.

3. Machine selon la revendication 2, où le rapport des zones de base dans les réservoirs de dosage est égal au rapport de mélange des composants de la résine.

4. Machine selon la revendication 1 ou 2 ou 3, où les jets d'air convergent vers un trou (100) pour la sortie de la résine de la tête de pulvérisation.

5. Machine selon l'une quelconque des revendications précédentes, comprenant un chariot mobile (CR) sur lequel est montée une tourelle avec un bras (94) extensible ou coulissant verticalement, à l'extrémité de laquelle est placée la tête de pulvérisation ; ou un bras en forme de L ou de C (96) est monté à ladite extrémité et la tête de pulvérisation est placée sur le bras.

6. Machine selon la revendication 5, où la tête de pulvérisation est montée tournant sur le bras ou sur le bras extensible ou coulissant.

7. Machine selon l'une quelconque des revendications précédentes, comprenant un moyen de chauffage (R) de la résine placé à la sortie des réservoirs de dosage.

8. Machine selon l'une quelconque des revendications précédentes, où la tête de pulvérisation comprend des conduits pouvant être alimentés par une accumulation de solvant extérieur (72) et aptes à diriger le solvant depuis l'entrée dans la tête des conduits (30, 34) provenant des réservoirs de dosage jusqu'à la sortie (100) vers l'extérieur d'une buse pour résine présente dans ladite tête.

9. Machine selon la revendication 8, comprenant
des conduits intérieurs pour transporter un fluide à des actionneurs de commande, tels que des vannes ou des pistons, et
une vanne de déviation (W) pour dévier le flux de conduits provenant de ladite accumulation de solvant vers lesdits conduits intérieurs.

10. Machine selon la revendication 9, où la vanne de déviation est actionnée par un actionneur, tel que, pour exemple, un cylindre pneumatique.

11. Machine selon l'une quelconque des revendications précédentes, où la résine comprend des microsphères.

12. Machine selon la revendication 11, où les microsphères ont un diamètre d'environ 100-200 microns et/ou relatives à 10-20% en poids de la résine.

13. Machine selon la revendication 11 ou 12, où les microsphères sont en verre ou en silicium.
